Europäisches Patentamt

European Patent Office

Office européen des brevets

(11) Veröffentlichungsnummer: **0 236 854**
**A1**

# EUROPÄISCHE PATENTANMELDUNG

(21) Anmeldenummer: 87102675.3

(22) Anmeldetag: 25.02.87

(51) Int. Cl.⁴: **C25B 1/00**

(30) Priorität: 11.03.86 CH 997/86

(43) Veröffentlichungstag der Anmeldung:
16.09.87 Patentblatt 87/38

(84) Benannte Vertragsstaaten:
CH DE FR GB LI

(71) Anmelder: **BBC Aktiengesellschaft Brown,
Boveri & Cie.**
**Haselstrasse**
**CH-5401 Baden(CH)**

(72) Erfinder: **Kötz, Rüdiger, Dr.**
**Brüelstrasse 386B,**
**CH-5424 Untersiggenthal(CH)**
Erfinder: **Stucki, Samuel, Dr.**
**Sternenstrasse 7**
**CH-5415 Nussbaumen(CH)**

(54) Verfahren zur kombinierten Erzeugung von Chlor und Ozon.

(57) Verfahren zur gleichzeitigen kombinierten Erzeugung von Chlor und Ozon auf elektrolytischem Wege, indem der Elektrolysezelle ein Chlorid in wässeriger Lösung zugegeben wird. Bevorzugte Ausführung der Elektrolysezelle mit Ionenaustauschermembran als Feststoffelektrolyt, wobei der Anodenseite ein zuvor in einer Mischbett-Ionenaustauschersäule enthärtetes Rohwasser zugeführt wird. Die Stromausbeute $\eta_I$ für $O_3$ wird dabei durch NaCl-Zusatz nicht beeinträchtigt. Diejenige für $Cl_2$ steigt mit der NaCl-Konzentration des zugeführten $H_2O$ linear an.

EP 0 236 854 A1

## Verfahren zur kombinierten Erzeugung von Chlor und Ozon

Die Erfindung geht aus von einem Verfahren zur kombinierten Erzeugung von Chlor und Ozon nach der Gattung des Oberbegriffs des Anspruchs 1.

Die Herstellung von Ozon auf elektrolytischem Wege unter Zuhilfenahme einer mit einem organischen Feststoffelektrolyten ausgerüsteten Zelle ist bekannt (Vergl. H.-P. Klein und S. Stucki, "The Production of Ozone by Elektrolysis and its Application in high purity Water Systems", Conference Proceedings 7th Ozone World Congress, 9-12 Sept. 1985, Tokyo; US-A-4 416 747; S. Stucki, G. Theis, R. Kötz, H. Devantay und H.J. Christen, "In Situ Production of Ozone in Water Using a Membrel Electrolyzer", J. Electrochem. Soc. 132, 1985, p. 367).

In vielen Fällen der Wasseraufbereitung genügt es nicht, das Wasser lediglich mit Ozon zu beladen. Es ist dann die zusätzliche Beimengung von stabileren Oxydationsmitteln wie $Cl_2$ oder $ClO_2$ als sogenannter Leitungsschutz notwendig.

Es besteht daher das Bedürfnis diesbezügliche Verfahren weiter zu entwickeln und zu verfeinern.

Der Erfindung liegt die Aufgabe zugrunde, ein Verfahren anzugeben, welches die direkte kombinierte Erzeugung von Chlor und Ozon in Wasser auf elektrolytischem Wege in einfacher Weise und mit hohen Stromausbeuten gestattet.

Diese Aufgabe wird durch die im kennzeichnenden Teil des Anspruchs 1 angegebenen Merkmale gelöst.

Es konnte in Laboratoriumsexperimenten an $PbO_2$-Anoden in $H_2SO_4$ mit NaCl-Zusatz gezeigt werden, dass überraschenderweise die Bildungsreaktion des Ozons von der Anwesenheit von Chlorid nicht beeinflusst wird. Die Stromausbeute für $O_3$ wird durch NaCl praktisch nicht beeinflusst. Die Bildung von Chlor geht also nur auf Kosten der im vorliegenden Fall als unerwünschte Nebenreaktion zu betrachtenden $O_2$-Entwicklung. Diese Erfahrung lässt sich für die gleichzeitige Erzeugung von $O_3$ und $Cl_2$ ohne Erhöhung des spezifischen Energieaufwandes in vorteilhafter Weise ausnutzen.

Die Erfindung wird anhand der nachfolgenden, durch Figuren näher erläuterten Ausführungsbeispiele beschrieben.

Dabei zeigt:

Fig. 1 den Verlauf der Stromausbeute $\eta_i$ für $Cl_2$ und für $O_3$ in Funktion der Cl⁻-Konzentration,

Fig. 2 den schematischen Aufbau und das Fliessbild einer Anlage für die gleichzeitige kombinierte Erzeugung von $Cl_2$ und $O_3$ in $H_2O$.

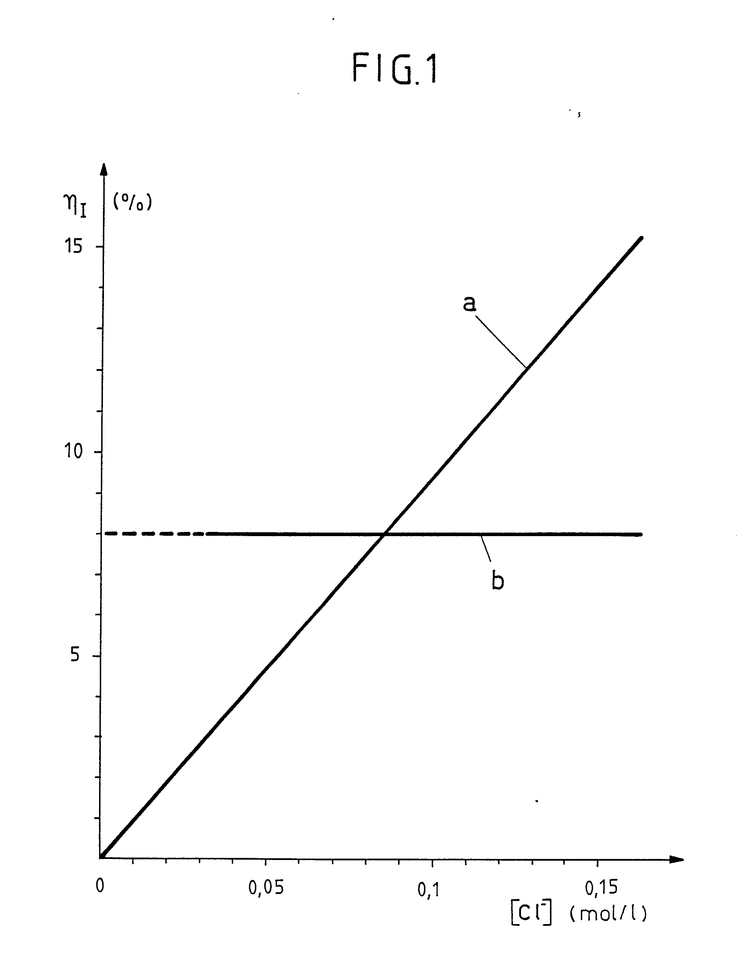

In Fig. 1 ist der Zusammenhang zwischen der Konzentration (Cl⁻) in mol/l (Abszisse) und den Stromausbeuten $\eta_i$ je für die $Cl_2$-Erzeugung und für die $O_3$-Erzeugung in % (Ordinate) dargestellt. Als Versuchsgrundlage diente eine Elektrolysezelle mit einer wässerigen Lösung von $H_2SO_4$ als Elektrolyt. "a" ist die Kurve für die Stromausbeute bezogen auf die $Cl_2$-Erzeugung, "b" diejenige für die $O_3$-Erzeugung. Die erstere läuft praktisch linear mit der Cl-Konzentration, was zu erwarten war. Kurve "b" verläuft praktisch horizontal, d.h. unabhängig von der Cl-Konzentration.

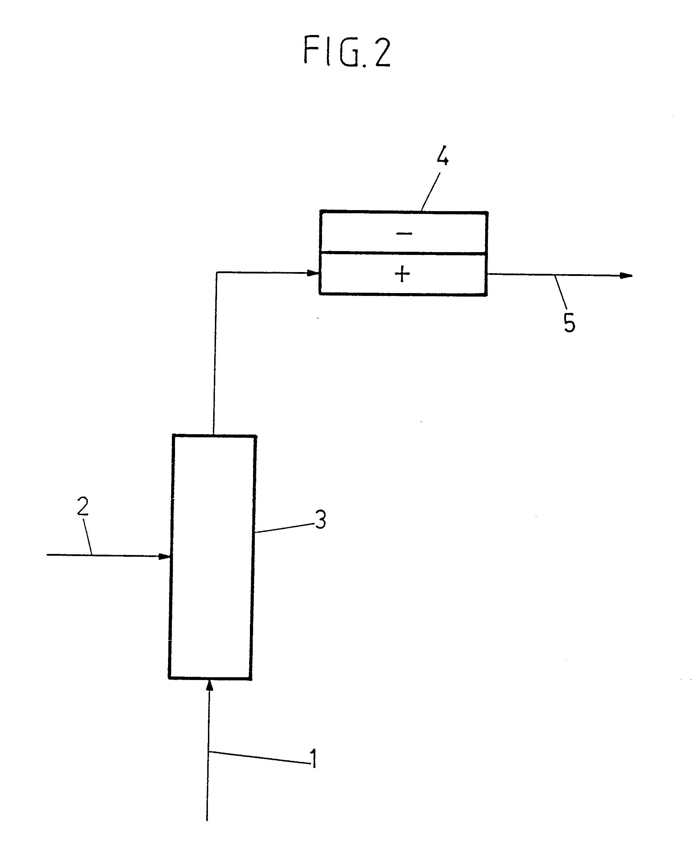

Fig. 2 stellt den schematischen Aufbau einer Anlage sowie das Fliessbild des Verfahrens dar. Die Zufuhr des Rohwassers 1 in eine Mischbett-Ionenaustauschersäule 3 ist durch einen Pfeil angedeutet. Letzterer wird zum Zwecke der Wasseraufbereitung NaCl (Bezugszeichen 2) zugeleitet. Sämtliche im Rohwasser 1 enthaltenen Anionen - (z.B. $SO_4^{2-}$, $HCO_3^-$) werden dabei in Cl⁻ und sämtliche Kationen (z.B. $Ca^{2+}$, $Mg^{2+}$) in $Na^+$ übergeführt. Das auf diese Weise aufbereitete Wasser wird der Anodenseite (durch +-Zeichen angedeutet) einer mit einer Ionenaustauschermembran als Feststoffelektrolyt ausgerüsteten Elektrolysezelle 4 zugeführt. 5 stellt das mit $O_3$ und $Cl_2$ beladene Wasser dar, welches selbstverständlich ausserdem noch $O_2$ enthält.

Ausführungsbeispiel 1:

Siehe Fig. 1!
Es wurde eine Versuchs-Elektrolysezelle für die Erzeugung von Ozon und Chlor wie folgt hergerichtet.

In einem Glasgefäss befand sich ein nach üblichen Verfahren mit $PbO_2$ beschichtetes Titanblech von 1 cm² Fläche. Eine Glasfritte trennte das Gefäss in ein Haupt-und ein Seitenkompartiment. Letzteres hatte ein Volumen von ca. 5 ml. In ihm befand sich ein Platinblech von 1 cm² Fläche. Das Glasgefäss wurde mit 40 ml einer 3M $H_2SO_4$ als Elektrolyt gefüllt. Letzterer wurde ständig mit Stickstoff (Volumenstrom 5 Nl/h) gespült und auf einer Temperatur von 23°C konstant gehalten. Zwischen dem mit $PbO_2$ als Anode beschichteten Titanblech und dem Platinblech als Kathode wurde eine elektrische Spannung solcher Grösse angelegt, dass in der Zelle ein Strom von 1 A floss: Stromdichte = 1 A/cm². Das an der $PbO_2$-Elektrode (Anode) abgeschiedene Gas wurde mittels eines UV-Spektrometers (Typ Shimadzu UV 160) gemessen und auf Ozon-und Chlorgehalt analysiert. Die Messung ergab, dass für die Ozonerzeugung eine Stromausbeute von 8 % erreicht wurde. Der Elektrolysezelle wurden nun x mol/l NaCl zugegeben. Dabei wurde x von 0 bis 0,15 mol/l variiert. Das an der Anode entstehende Gas wurde sowohl auf $O_3$ wie auf $Cl_2$ spektrometrisch untersucht und die entsprechende Stromausbeute in Funktion der Konzentration x bzw. (Cl⁻) graphisch dargestellt - (siehe Kurven "b" und "a").

Die Stromausbeute $\eta_l$ für $O_3$ blieb praktisch über den gesamten Konzentrationsbereich von NaCl im Elektrolyten konstant. Da andererseits die Stromausbeute $\eta_l$ für $Cl_2$ linear mit dem NaCl-Gehalt im Elektrolyten anstieg, musste dies auf Kosten der ohnehin in diesem Zusammenhang nicht interessierenden $O_2$-Entwicklung geschehen.

Ausführungsbeispiel 2:

Einer mit einer Ionenaustauschermembran als Feststoff elektrolyt ausgerüsteten Elektrolysezelle wurde auf der Anodenseite statt reines Wasser eine wässerige Lösung mit 0,05 mol/l NaCl zugeführt. Der Zellenstrom betrug 30 A, die Stromdichte 1 A/cm², die Zellenspannung 3,4 V. Am Ausgang der Zelle konnten folgende Stofflüsse nachgewiesen werden:

$H_2O$: 30 l/h
$O_3$ : 0,8 g/h
$Cl_2$: 1,9 g/h

Ausführungsbeispiel 3:

Siehe Fig. 2!
Eine Elektrolysezelle 4 gemäss Beispiel 2 wurde über eine Mischbett-Ionenaustauschersäule 3 anodenseitig mit Rohwasser 1 gespeist. In 3 wurden die Anionen des Rohwassers gegen Cl⁻ die Kationen gegen Na⁺-Ionen ausgetauscht. Der Zellenstrom betrug 30 A, die Elektro,denfläche 30 cm², die Stromdichte 1 A/cm². Am Ausgang der Elektrolytzelle 4 wurden im mit $O_3$ und $Cl_2$ beladenen Wasser 5 folgende Mengen pro Zeiteinheit bestimmt:

$H_2O$: 30 l/h
$O_3$ : 0,9 g/h
$Cl_2$: 0,7 g/h

Die Erfindung ist nicht auf die Ausführungsbeispiele beschränkt. Grundsätzlich lässt sich das Verfahren mit Zusatz eines Chlorids durchführen. Muss das Rohwasser zuerst aufbereitet werden, so tritt an die Stelle gewöhnlicher Enthärtungsanlagen vorzugsweise ein Misch bettfilter. Als Elektrolysezelle für die Ozon-und Chlorerzeugung empfiehlt sich mit Vorteil eine mit einem organischen Feststoffelektrolyten ausgerüstete Einheit. Dabei kann die der Anodenseite zugeführte wässerige Lösung vorzugsweise bis 0,15 mol/l NaCl enthalten.

## Ansprüche

1. Verfahren zur gleichzeitigen kombinierten Erzeugung von Chlor und Ozon auf elektrolytischem Wege, dadurch gekennzeichnet, dass der Elektrolysezelle ein Chlorid in wässriger Lösung zugegeben wird.

2. Verfahren nach Anspruch 1, dadurch gekennzeichnet, dass als Chlorid NaCl in einer Menge von bis 0,15 mol/l benutzt wird.

3. Verfahren nach Anspruch 1, dadurch gekennzeichnet, dass zur Elektrolyse eine mit einer organischen Ionenaustauschermembran als Feststoffelektrolyt ausgerüstete Elektrolysezelle (4) verwendet wird, deren Anodenseite eine wässerige Lösung von bis 0,15 mol/l NaCl zugeführt wird.

4. Verfahren nach Anspruch 3, dadurch gekennzeichnet, dass zur Speisung der Elektrolysezelle (4) ein mittels einer Mischbett-Ionenaustauschersäule (3) mit NaCl (2) behandeltes Rohwasser (1) verwendet wird.

# FIG.1

# FIG.2

**Europäisches Patentamt**

**EUROPÄISCHER RECHERCHENBERICHT**

Nummer der Anmeldung

EP 87 10 2675

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 567 767 (O. PAUSER)<br>* Seite 2, Zeilen 1-17; Seite 6, Zeilen 4-20; Seite 7, Zeilen 1-12 * | 1,2 | C 25 B 1/00 |
| | --- | | |
| X | US-A-4 236 992 (C.D. THEMY)<br>* Spalte 2, Zeilen 8-16; Spalte 5, Tabelle und Zeilen 14-18 * | 1,2 | |
| | --- | | |
| A | CHEMICAL ABSTRACTS, Band 104, Nr. 4, 27. Januar 1986, Seite 87, Zusammenfassung Nr. 21059g, Columbus, Ohio, US; & ZA-A-84 08 517 (C.T. SWEENEY) 26-06-1985 | 1,3 | |
| | ----- | | |

|  |
|---|
| RECHERCHIERTE SACHGEBIETE (Int. Cl.4) |
| C 25 B 1 |

Der vorliegende Recherchenbericht wurde für alle Patentansprüche erstellt.

| Recherchenort | Abschlußdatum der Recherche | Prüfer |
|---|---|---|
| DEN HAAG | 19-06-1987 | GROSEILLER PH.A. |